# FASCICULE DE BREVET EUROPEEN

(11) **EP 3 201 455 B1**
(45) Date de publication et mention de la délivrance du brevet: **11.12.2019**
(21) Numéro de dépôt: 15778990.0
(22) Date de dépôt: 21.09.2015
(51) Int. Cl.: F02C 7/277, F02C 6/08

(54) **DISPOSITIF ET PROCÉDÉ DE TEST D'INTÉGRITÉ D'UN SYSTÈME DE RÉACTIVATION RAPIDE D'UN TURBOMOTEUR D'UN HÉLICOPTÈRE**
VORRICHTUNG UND VERFAHREN ZUM TESTEN DER INTEGRITÄT DES SCHNELLNEUSTARTSYSTEMS EINES HUBSCHRAUBERTURBINENMOTORS
DEVICE AND METHOD FOR TESTING THE INTEGRITY OF A HELICOPTER TURBINE ENGINE RAPID RESTART SYSTEM

(30) Priorité: 29.09.2014 FR 1459165
(43) Date de publication de la demande: 09.08.2017
(73) Titulaire: Safran Helicopter Engines, 64510 Bordes (FR)
(72) Inventeur: THIRIET, Romain, 64110 Jurancon (FR); BAZET, Jean-Michel, 64110 Gelos (FR); SERGHINE, Camel, 64510 Boeil-Bezing (FR); MARCONI, Patrick, 77550 Moissy-Cramayel (FR); IRIGOYEN, Jérôme, 77550 Moissy-Cramayel (FR); LANGFORD, Stephen, 64000 Pau (FR)
(74) Mandataire: Gevers & Orès
(86) Numéro de dépôt international: PCT/FR2015/052529
(87) Numéro de publication internationale: WO 2016/051048

(56) Documents cités:
- EP-A2- 2 514 949
- US-A- 3 107 489
- US-A1- 2013 051 975
- US-A1- 2014 178 175
- US-B2- 8 291 715

## Description

### 1. Domaine technique de l'invention

L'invention concerne un dispositif et un procédé de test d'intégrité d'un système de réactivation rapide d'un turbomoteur. L'invention concerne également un turbomoteur d'hélicoptère équipé d'un tel dispositif de test d'intégrité.

### 2. Arrière-plan technologique

Un hélicoptère bimoteur ou trimoteur présente de manière connue un système propulsif comprenant deux ou trois turbomoteurs, chaque turbomoteur comprenant un générateur de gaz et une turbine libre entrainée en rotation par le générateur de gaz, et solidaire d'un arbre de sortie. L'arbre de sortie de chaque turbine libre est adapté pour mettre en mouvement une boite de transmission de puissance, qui entraîne elle-même le rotor de l'hélicoptère.

Il est connu que lorsque l'hélicoptère est en situation de vol de croisière (c'est-à-dire lorsqu'il évolue dans des conditions normales, au cours de toutes les phases du vol, hors phases transitoires de décollage, de montée, d'atterrissage ou de vol stationnaire), les turbomoteurs développent des puissances faibles inférieures aux puissances maximales continues. Ces faibles niveaux de puissance entraînent une consommation spécifique (ci-après, Cs), définie comme le rapport entre la consommation horaire de carburant par la chambre de combustion du turbomoteur et la puissance mécanique fournie par ce turbomoteur, supérieure de l'ordre de 30% à la Cs de la puissance maximale de décollage, et donc une surconsommation en carburant en vol de croisière.

En outre, les turbomoteurs d'un hélicoptère sont conçus de manière surdimensionnée pour pouvoir maintenir l'hélicoptère en vol en cas de panne de l'un des moteurs. Cette situation de vol survient suite à la perte d'un moteur et se traduit par le fait que chaque moteur en fonctionnement fournit une puissance bien au-delà de sa puissance nominale pour permettre à l'hélicoptère de faire face à une situation périlleuse, puis de pouvoir poursuivre son vol.

Les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation.

Ces turbomoteurs surdimensionnés sont pénalisants en termes de masse et de consommation de carburant. Afin de réduire cette consommation en vol de croisière, il est envisagé de mettre en veille en vol au moins l'un des turbomoteurs. Le ou les moteurs actifs fonctionnent alors à des niveaux de puissance plus élevés pour fournir toute la puissance nécessaire et donc à des niveaux de Cs plus favorables.

La mise en veille d'un turbomoteur implique de disposer d'un système de réactivation rapide qui permet de sortir rapidement le turbomoteur en veille en cas de besoin. Ce besoin peut par exemple résulter d'une panne de l'un des moteurs actifs ou de la dégradation imprévue des conditions de vol nécessitant un retour rapide de la pleine puissance.

Le demandeur a déjà proposé un système de réactivation rapide mettant en oeuvre une turbine pneumatique reliée mécaniquement au turbomoteur et configurée de sorte à pouvoir transformer l'énergie du gaz sous pression en entrée de turbine en énergie mécanique entrainant le générateur de gaz du turbomoteur. L'alimentation en gaz de la turbine pneumatique peut, par exemple, être réalisée par la coopération d'un stockeur pneumatique et d'une vanne à ouverture rapide commandée ou par un dispositif de stockage à propergol solide. Par exemple, le document US 2014/178175 A1 décrit un dispositif de démarrage pneumatique d'une turbine à gaz et un dispositif de surveillance d'un tel dispositif.

Le demandeur a donc cherché à mettre au point un procédé et un dispositif de test de l'intégrité du système de réactivation rapide de manière à pouvoir garantir que le système de réactivation rapide fonctionne et peut être utilisé en vol.

### 3. Objectifs de l'invention

L'invention vise à fournir un procédé et un dispositif de test d'intégrité d'un système de réactivation rapide d'un turbomoteur.

L'invention vise notamment à fournir, dans au moins un mode de réalisation, un dispositif de test d'intégrité qui peut être intégré sans difficultés dans une architecture d'un système propulsif d'un hélicoptère bimoteur ou trimoteur.

L'invention vise aussi à fournir, dans au moins un mode de réalisation de l'invention, un procédé de test d'intégrité qui peut être mis en œuvre au sol avant le décollage ou au cours du vol, avant la mise en veille d'un turbomoteur.

L'invention vise aussi à fournir un turbomoteur équipé d'un dispositif de test d'intégrité selon l'invention.

### 4. Exposé de l'invention

Pour ce faire, l'invention concerne un dispositif de test d'intégrité d'un système de réactivation rapide d'un turbomoteur d'un hélicoptère comprenant une turbine pneumatique reliée mécaniquement audit turbomoteur et alimentée en gaz sou pression, sur commande, par un circuit pneumatique d'alimentation de manière à pouvoir entraîner ledit turbomoteur en rotation et assurer sa réactivation.

Un dispositif selon l'invention est caractérisé en ce qu'il comprend :
- des moyens de prélèvement d'air sous pression sur le turbomoteur,
- une conduite de cheminement de cet air prélevé vers ledit circuit pneumatique d'alimentation en gaz de ladite turbine pneumatique,
- des moyens de détermination de la vitesse de rotation de ladite turbine pneumatique.

Un dispositif selon l'invention permet donc de tester l'intégrité de la chaine cinématique d'un système de réactivation rapide d'un turbomoteur. En particulier, il permet de vérifier que la turbine pneumatique est bien mue en rotation lorsqu'un air sous pression prélevé sur le turbomoteur - par exemple un air sous pression modérée - est injecté en entrée de turbine. Un dispositif selon l'invention permet de tester l'ensemble de la chaine cinématique du système de réactivation rapide, en particulier, la turbine pneumatique en tant que telle, mais également le rotor de la turbine et ses paliers, et tout élément mécanique agencé en amont de la turbine pneumatique. Un tel dispositif de test d'intégrité est indépendant du système de réactivation rapide. En particulier, la conduite d'acheminement de l'air prélevé sur le turbomoteur est indépendante du circuit d'alimentation en gaz du système de réactivation rapide.

Avantageusement, un dispositif selon l'invention comprend un électro-clapet ménagé au niveau de la jonction du circuit pneumatique et de ladite conduite de cheminement d'air, ledit électro-clapet étant configuré pour libérer, sur commande d'une unité de commande et en l'absence d'une alimentation en gaz sous pression dudit circuit pneumatique, un passage d'air entre ladite conduite de cheminement et ledit circuit pneumatique, et bloquer, en l'absence de commande ou en présence d'une alimentation en gaz sous pression dudit circuit pneumatique, ledit passage d'air.

L'unité de commande est par exemple le calculateur électronique de régulation de l'hélicoptère (plus connu sous l'acronyme EECU). Cette unité de commande pilote l'électro-clapet pour qu'il libère un passage d'air entre la conduite de cheminement d'air et le circuit d'alimentation pneumatique de la turbine pneumatique. En l'absence de mise en œuvre du test d'intégrité, l'électro-clapet bloque le passage d'air. En outre, l'électro-clapet bloque naturellement le passage d'air si le circuit pneumatique est alimenté en gaz sous pression. Le circuit pneumatique et la turbine pneumatique du système de réactivation ne sont donc pas perturbés par le dispositif de test d'intégrité.

Avantageusement et selon l'invention, ledit électro-clapet comprend un ressort taré adapté pour maintenir bloqué le passage d'air en l'absence de commande ou en présence d'une alimentation en gaz sous pression dudit circuit pneumatique.

Au cours d'une procédure de réactivation rapide, l'électro-clapet est naturellement maintenu en position fermée par la pression exercée par le gaz circulant dans le circuit pneumatique. Pour ce faire, la force exercée sur le ressort pour le comprimer en vue de libérer le passage d'air est inférieure à la pression exercée par le gaz chaud sous pression qui circule dans le circuit pneumatique au cours d'une procédure de réactivation rapide du turbomoteur.

En outre, le ressort taré permet de garantir la fermeture du passage d'air en l'absence de commande en s'opposant à la pression exercée par l'air sous pression prélevé sur le turbomoteur et présent dans la conduite de cheminement d'air.

Avantageusement et selon l'invention, les moyens de prélèvement d'air sous pression sur le turbomoteur sont ménagés au niveau d'un compresseur de ce turbomoteur.

Un turbomoteur comprend de manière classique au moins un étage de compresseur, de préférence un premier étage de compresseur et un deuxième étage de compresseur. Les moyens de prélèvement d'air peuvent alors être ménagés sur l'un et/ou l'autre des étages de compresseur. Ces moyens de prélèvement sont par exemple formés par un bossage dédié ménagé sur le carter extérieur du turbomoteur au niveau de l'un et/ou l'autre des étages de compresseur. L'air ainsi prélevé présente une pression modérée, de l'ordre de 2 à 15 bars.

L'invention concerne également un turbomoteur d'hélicoptère équipé d'un système de réactivation rapide comprenant une turbine pneumatique reliée mécaniquement audit turbomoteur et alimentée en gaz, sur commande, par un circuit pneumatique d'alimentation de manière à pouvoir entraîner ledit turbomoteur en rotation et assurer sa réactivation.

Un turbomoteur selon l'invention est caractérisé en ce qu'il comprend un dispositif de test d'intégrité dudit système de réactivation rapide selon l'invention.

L'invention concerne également un procédé de test d'intégrité d'un système de réactivation rapide d'un turbomoteur comprenant une turbine pneumatique reliée mécaniquement audit turbomoteur et alimentée en gaz, sur commande, par un circuit pneumatique d'alimentation de manière à pouvoir entraîner ledit turbomoteur en rotation et assurer sa réactivation.

Le procédé selon l'invention est caractérisé en ce qu'il comprend :
- une étape de prélèvement d'air sous pression sur le turbomoteur,
- une étape de cheminement de cet air vers ladite turbine pneumatique,
- une étape de mesure de la vitesse de rotation de ladite turbine pneumatique.

Un procédé selon l'invention est avantageusement mis en œuvre par un dispositif selon l'invention et un dispositif selon l'invention met avantageusement en œuvre un procédé selon l'invention.

Le procédé selon l'invention peut être mis en œuvre soit au sol, avant le décollage de l'hélicoptère, soit en cours de vol, avant la mise en veille du turbomoteur.

Avantageusement, un procédé selon l'invention comprend une étape de comparaison de la vitesse de rotation de ladite turbine pneumatique mesurée à une vitesse de seuil prédéterminée.

La vitesse de seuil prédéterminée est par exemple définie comme un pourcentage prédéterminé de la vitesse de rotation minimale de la turbine à gaz du turbomoteur. Si la vitesse mesurée au cours de l'étape de mesure de la vitesse est supérieure à la vitesse de seuil, alors le système de réactivation rapide est considéré comme intègre. Si la vitesse mesurée est inférieure à la vitesse de seuil prédéterminée, le système est considéré comme non fiable et la mise en veille du turbomoteur est donc interdite.

Avantageusement et selon l'invention, ladite étape de cheminement d'air comprend une étape de commande à l'ouverture d'un électro-clapet ménagé au niveau de la jonction du circuit pneumatique et de ladite conduite de cheminement d'air, ledit électro-clapet étant configuré pour libérer, sur commande d'une unité de commande, et en l'absence d'une alimentation en gaz sous pression du circuit pneumatique, un passage d'air entre ladite conduite de cheminement et ledit circuit pneumatique, et bloquer en l'absence de commande ou en présence d'une alimentation en gaz sous pression du circuit pneumatique, ledit passage d'air.

Avantageusement, un procédé selon l'invention comprend une étape de détection d'une ouverture intempestive dudit électro-clapet par une mesure de vitesse non nulle de ladite turbine pneumatique en l'absence de commande à l'ouverture dudit électro-clapet et hors procédure de réactivation rapide du turbomoteur.

En l'absence d'une procédure de réactivation rapide du turbomoteur et de la mise en œuvre d'un test d'intégrité, la turbine pneumatique ne devrait par être mue en rotation. Aussi, l'invention prévoit une étape de détection d'une ouverture intempestive par la mesure de la vitesse de rotation non nulle de la turbine pneumatique. Cette étape peut être mise en œuvre selon une périodicité prédéterminée pour vérifier que le dispositif de test n'est pas en panne. Si la vitesse mesurée est non nulle, en l'absence d'une procédure de réactivation rapide et en l'absence d'un test d'intégrité, c'est que le dispositif de test est en panne.

Avantageusement, un procédé selon l'invention comprend une étape de sauvegarde des mesures de vitesse de ladite turbine pneumatique de manière à pouvoir fournir un suivi de tendance de l'état de la turbine pneumatique.

L'invention concerne également un dispositif de test d'intégrité, un procédé de test d'intégrité et un turbomoteur équipé d'un dispositif de test d'intégrité, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un turbomoteur équipé d'un système de réactivation rapide,
- la figure 2 est une vue schématique d'un turbomoteur équipé d'un dispositif de test d'intégrité d'un système de réactivation rapide, selon un mode de réalisation de l'invention,
- la figure 3 est une vue schématique d'un électro-clapet d'un dispositif de test d'intégrité selon un mode de réalisation de l'invention, en position fermée,
- la figure 4 est une vue schématique d'un électro-clapet d'un dispositif de test d'intégrité selon un mode de réalisation de l'invention, en position ouverte.

### 6. Description détaillée d'un mode de réalisation de l'invention

Sur les figures, les échelles et les proportions ne sont pas respectées et ce, à des fins d'illustration et de clarté.

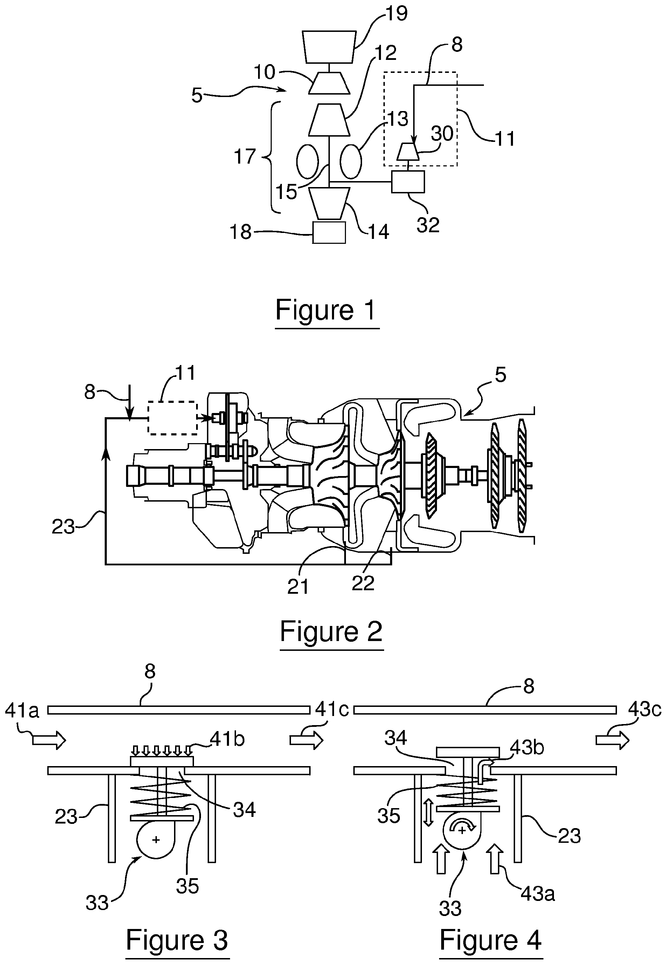

La figure 1 représente schématiquement un turbomoteur 5 adapté pour être mis en régime de veille et équipé d'un système de réactivation rapide comprenant une turbine pneumatique.

Ce turbomoteur 5 comprend un générateur 17 de gaz et une turbine 10 libre alimentée par le générateur 17. Le générateur 17 de gaz comprend un compresseur 14 d'air alimenté en air par une entrée 18 d'air. Le compresseur 14 alimente une chambre 13 de combustion d'un carburant dans l'air comprimé qui délivre des gaz brûlés fournissant de l'énergie cinétique. Une turbine 12 de détente partielle des gaz brûlés est couplée au compresseur 14 par le biais d'un arbre 15 d'entraînement pour pouvoir entraîner en rotation le compresseur 14 et des équipements nécessaires au fonctionnement du générateur de gaz ou à l'hélicoptère. Ces équipements sont disposés dans une boîte 32 d'accessoires. La partie résultante des gaz brûlés entraîne la turbine 10 libre de transmission de puissance en lien avec une boite de transmission de puissance (ci-après BTP) de l'hélicoptère puis s'évacue via l'échappement 19.

Le système 11 de réactivation rapide comprend une turbine 30 pneumatique, qui selon le mode de réalisation de la figure 1, est reliée mécaniquement au turbomoteur par le biais de la boite d'accessoires 32. Cette turbine 30 pneumatique est alimentée en gaz par un circuit 8 d'alimentation en gaz, non décrit en détail.

Un dispositif de test d'intégrité selon l'invention comprend, tel que représenté sur la figure 2, des moyens 21, 22 de prélèvement d'air sous pression sur le turbomoteur, une conduite 23 de cheminement de cet air prélevé vers le circuit 8 pneumatique d'alimentation en gaz de la turbine 30 pneumatique, et des moyens de détermination de la vitesse de rotation de ladite turbine pneumatique.

Les moyens de détermination de la vitesse de rotation ne sont pas représentés sur la figure à des fins de clarté. Ces moyens comprennent par exemple un capteur de vitesse monté sur l'arbre de la turbine 30 pneumatique. Ce capteur est relié à un module de traitement, par exemple ménagé dans un ordinateur équipé d'un microprocesseur. De préférence, le module de traitement est directement ménagé dans l'unité de régulation et de contrôle de l'hélicoptère (non représenté sur les figures à des fins de clarté).

Ce module de traitement comprend selon un mode de réalisation une mémoire paramétrable configurée pour contenir une valeur d'une vitesse de seuil, par exemple exprimée par un pourcentage de la vitesse nominale de la turbine à gaz. Si la vitesse de rotation de la turbine 30 pneumatique mesurée par le capteur de vitesse est supérieure à la vitesse de seuil, alors, l'intégrité du système de réactivation rapide est confirmée.

Pour alimenter en air la turbine 30 pneumatique au cours d'une procédure de test de l'intégrité du système de réactivation, l'invention prévoit selon un mode de réalisation avantageux, un électro-clapet 33 ménagé au niveau de la jonction du circuit 8 pneumatique et de la conduite 23 de cheminement d'air. Cet électro-clapet 33 est représenté sur les figures 3 et 4.

L'électro-clapet 33 est configuré pour libérer, sur commande d'une unité de commande non représentée sur les figures, par exemple l'EECU de l'hélicoptère, un passage 34 d'air ménagé entre la conduite 23 de cheminement et le circuit 8 pneumatique, et bloquer, en l'absence de commande, ce passage 34 d'air. L'électro-clapet 33 comprend un ressort 35 taré adapté pour maintenir bloqué le passage d'air en l'absence de commande.

Sur la figure 3, le passage 34 d'air est bloqué par l'électro-clapet 33. Cette position correspond soit à une absence de test d'intégrité et à une absence de procédure de réactivation. C'est la position par défaut. L'électro-clapet 33 est alors maintenu en position fermée par l'action du ressort 35. La position de la figure 3 correspond aussi à la position en cours de procédure de réactivation du turbomoteur. Dans ce cas, le circuit 8 pneumatique véhicule un gaz sous pression, représenté par les flèches 41a, 41b, 41c sur la figure 3, vers la turbine 30 pneumatique. La pression du gaz maintient l'électro-clapet 33 en position fermée. Cette pression de maintien est représentée par les flèches 41b sur la figure 3.

La figure 4 représente la position de l'électro-clapet 33 au cours d'une procédure de test d'intégrité du système de réactivation rapide. L'air prélevé sur le turbomoteur circule dans la conduite 23 de cheminement, passe par le passage 34, débouche dans le circuit 8 pneumatique pour être véhiculé vers la turbine 30 pneumatique. Le cheminement de l'air au cours de la procédure de test d'intégrité est représenté par les flèches 43a, 43b, 43c sur la figure 4.

L'invention concerne également un procédé de test d'intégrité d'un système de réactivation rapide d'un turbomoteur comprenant une étape de prélèvement d'air sous pression sur le turbomoteur, une étape de cheminement de cet air vers ladite turbine à air et une étape de mesure de la vitesse de rotation de ladite turbine à air.

Selon un mode de réalisation, le procédé comprend en outre une étape de comparaison de la vitesse de rotation de ladite turbine pneumatique mesurée à une vitesse de seuil prédéterminée. Il peut également comprendre une étape de détection d'une ouverture intempestive dudit électro-clapet par une mesure de vitesse non nulle de ladite turbine pneumatique en l'absence de commande à l'ouverture dudit électro-clapet et hors procédure de réactivation rapide du turbomoteur. Il peut également comprendre une étape de sauvegarde des mesures de vitesse de ladite turbine pneumatique de manière à pouvoir fournir un suivi de tendance de l'état de la turbine pneumatique.

Chaque étape du procédé selon l'invention est avantageusement mise en œuvre par un dispositif de test d'intégrité selon l'invention.

## Revendications

1. Dispositif de test d'intégrité d'un système de réactivation rapide d'un turbomoteur (5) d'un hélicoptère comprenant une turbine (30) pneumatique reliée mécaniquement audit turbomoteur (5) et alimentée en gaz sous pression, sur commande, par un circuit (8) pneumatique d'alimentation de manière à pouvoir entraîner ledit turbomoteur (5) en rotation et assurer sa réactivation, ledit dispositif de test étant **caractérisé en ce qu'**il comprend :
- des moyens (21, 22) de prélèvement d'air sous pression sur le turbomoteur (5),
- une conduite (23) de cheminement de cet air prélevé vers ledit circuit (8) pneumatique d'alimentation de ladite turbine (30) pneumatique,
- des moyens de détermination de la vitesse de rotation de ladite turbine (30) pneumatique.

2. Dispositif selon la revendication 1, **caractérisé en ce qu'**il comprend un électro-clapet (33) ménagé au niveau de la jonction du circuit (8) pneumatique et de ladite conduite (23) de cheminement d'air, ledit électro-clapet (33) étant configuré pour libérer, sur commande d'une unité de commande et en l'absence d'une alimentation en gaz sous pression dudit circuit (8) pneumatique, un passage (34) d'air entre ladite conduite (23) de cheminement et ledit circuit (8) pneumatique, et bloquer, en l'absence de commande ou en présence d'une alimentation en gaz sous pression dudit circuit pneumatique, ledit passage (34) d'air.

3. Dispositif selon la revendication 2, **caractérisé en ce que** ledit électro-clapet (33) comprend un ressort (35) taré adapté pour maintenir bloqué le passage (34) d'air en l'absence de commande ou en présence d'une alimentation en gaz sous pression dudit circuit (8) pneumatique.

4. Dispositif de test selon l'une des revendications 1 à 3, **caractérisé en ce que** lesdits moyens (21, 22) de prélèvement d'air sous pression sur le turbomoteur (5) sont ménagés au niveau d'un compresseur (14) de ce turbomoteur.

5. Turbomoteur d'hélicoptère équipé d'un système de réactivation rapide comprenant une turbine (30) pneumatique reliée mécaniquement audit turbomoteur et alimentée en gaz, sur commande, par un circuit (8) pneumatique d'alimentation de manière à pouvoir entraîner ledit turbomoteur en rotation et assurer sa réactivation, **caractérisé en ce qu'**il comprend un dispositif de test d'intégrité dudit système de réactivation rapide selon l'une des revendications 1 à 4.

6. Procédé de test d'intégrité d'un système de réactivation rapide d'un turbomoteur (5) comprenant une turbine (30) pneumatique reliée mécaniquement audit turbomoteur (5) et alimentée en gaz, sur commande, par un circuit (8) pneumatique d'alimentation de manière à pouvoir entraîner ledit turbomoteur (5) en rotation et assurer sa réactivation, **caractérisé en ce qu'**il comprend :
- une étape de prélèvement d'air sous pression sur le turbomoteur (5),
- une étape de cheminement de cet air vers ladite turbine (30) pneumatique,
- une étape de mesure de la vitesse de rotation de ladite turbine (30) pneumatique.

7. Procédé selon la revendication 6, **caractérisé en ce qu'**il comprend une étape de comparaison de la vitesse de rotation de ladite turbine (30) pneumatique mesurée à une vitesse de seuil prédéterminée.

8. Procédé selon la revendication 7, **caractérisé en ce que** ladite étape de cheminement d'air comprend une étape de commande à l'ouverture d'un électro-clapet (33) ménagé au niveau de la jonction du circuit (8) pneumatique et de ladite conduite (23) de cheminement d'air, ledit électro-clapet (33) étant configuré pour libérer, sur commande d'une unité de commande et en l'absence d'une alimentation en gaz sous pression de ladite conduite (8) pneumatique, un passage (34) d'air entre ladite conduite (23) de cheminement et ledit circuit (8) pneumatique, et bloquer en l'absence de commande ou en présence d'une alimentation en gaz sous pression de ladite conduite (8) pneumatique ledit passage (34) d'air.

9. Procédé selon la revendication 8, **caractérisé en ce qu'**il comprend une étape de détection d'une ouverture intempestive dudit électro-clapet (33) par une mesure de vitesse non nulle de ladite turbine (30) pneumatique en l'absence de commande à l'ouverture dudit électro-clapet (33) et hors procédure de réactivation rapide du turbomoteur.

10. Procédé selon l'une des revendications 6 à 9, **caractérisé en ce qu'**il comprend une étape de sauvegarde des mesures de vitesse de ladite turbine (30) pneumatique de manière à pouvoir fournir un suivi de tendance de l'état de la turbine (30) pneumatique.

## Patentansprüche

1. Vorrichtung zum Testen der Integrität eines Schnellneustartsystems eines Turbomotors (5) eines Hubschraubers, umfassend eine pneumatische Turbine (30), die mechanisch mit dem Turbomotor (5) verbunden ist und mit druckbeaufschlagtem Gas versorgt wird, auf Befehl, über einen pneumatischen Versorgungskreislauf (8), um den Turbomotor (5) in Drehbewegung zu versetzen und seinen Neustart gewährleisten zu können, wobei die Vorrichtung zum Testen **dadurch gekennzeichnet ist, dass** sie umfasst:
- Mittel (21, 22) zur Entnahme von druckbeaufschlagter Luft auf dem Turbomotor (5),
- eine Leitung (23) zum Transport dieser entnommenen Luft zum pneumatischen Versorgungskreislauf (8) der pneumatischen Turbine (30),
- Mittel zum Bestimmen der Drehzahl der pneumatischen Turbine (30).

2. Vorrichtung nach Anspruch 1, **dadurch gekennzeichnet, dass** sie ein Elektroventil (33) umfasst, das auf Höhe der Verbindungsstelle des pneumatischen Versorgungskreislaufs (8) und der Leitung (23) zum Transport von Luft angeordnet ist, wobei das Elektroventil (33) konfiguriert ist, um auf Befehl einer Befehlseinheit und bei Nichtvorhandensein einer Versorgung des pneumatischen Versorgungskreislaufs (8) mit druckbeaufschlagtem Gas einen Luftdurchgang (34) zwischen der Leitung (23) zum Transport und dem pneumatischen Versorgungskreislauf (8) freizugeben, und bei Nichtvorhandensein eines Befehls oder bei Vorhandensein einer Versorgung des pneumatischen Versorgungskreislaufs mit druckbeaufschlagtem Gas den Luftdurchgang (34) zu sperren.

3. Vorrichtung nach Anspruch 2, **dadurch gekennzeichnet, dass** das Elektroventil (33) eine geeichte Feder (35) umfasst, die angepasst ist, um bei Nichtvorhandensein eines Befehls oder bei Vorhandensein einer Versorgung des pneumatischen Versorgungskreislaufs (8) mit druckbeaufschlagtem Gas den Luftdurchgang (34) gesperrt zu halten.

4. Vorrichtung zum Testen nach einem der Ansprüche 1 bis 3, **dadurch gekennzeichnet, dass** die Mittel (21, 22) zur Entnahme von druckbeaufschlagter Luft auf dem Turbomotor (5) auf Höhe eines Verdichters (14) dieses Turbomotors angeordnet sind.

5. Hubschrauberturbomotor, der mit einem Schnellneustartsystem ausgestattet ist, umfassend eine pneumatische Turbine (30), die mechanisch mit dem Turbomotor verbunden ist und auf Befehl über einen pneumatischen Versorgungskreislauf (8) mit Gas versorgt wird, um den Turbomotor in Drehbewegung versetzen und seinen Neustart gewährleisten zu können, **dadurch gekennzeichnet, dass** er eine Vorrichtung zum Testen der Integrität des Schnellneustartsystems nach einem der Ansprüche 1 bis 4 umfasst.

6. Verfahren zum Testen der Integrität eines Schnellneustartsystems eines Turbomotors (5), umfassend eine pneumatische Turbine (30), die mechanisch mit dem Turbomotor (5) verbunden ist und auf Befehl über einen pneumatischen Versorgungskreislauf (8) mit Gas versorgt wird, um den Turbomotor (5) in Drehbewegung versetzen und seinen Neustart gewährleisten zu können, **dadurch gekennzeichnet, dass** es umfasst:
- einen Schritt einer Entnahme von druckbeaufschlagter Luft auf dem Turbomotor (5),
- einen Schritt eines Transports dieser Luft zur pneumatischen Turbine (30),
- einen Schritt eines Messens der Drehzahl der pneumatischen Turbine (30).

7. Verfahren nach Anspruch 6, **dadurch gekennzeichnet, dass** es einen Schritt eines Vergleichs der gemessenen Drehzahl der pneumatischen Turbine (30) mit einer vorbestimmten Schwellengeschwindigkeit umfasst.

8. Verfahren nach Anspruch 7, **dadurch gekennzeichnet, dass** der Schritt eines Transports von Luft einen Schritt eines Befehls zur Öffnung eines Elektroventils (33) umfasst, das auf Höhe der Verbindungsstelle des pneumatischen Versorgungskreislaufs (8) und der Leitung (23) zum Transport von Luft angeordnet ist, wobei das Elektroventil (33) konfiguriert ist, um auf Befehl einer Befehlseinheit und bei Nichtvorhandensein einer Versorgung des pneumatischen Versorgungskreislaufs (8) mit druckbeaufschlagtem Gas einen Luftdurchgang (34) zwischen der Leitung (23) zum Transport und dem pneumatischen Versorgungskreislauf (8) freizugeben, und bei Nichtvorhandensein eines Befehls oder bei Vorhandensein einer Versorgung des pneumatischen Versorgungskreislaufs (8) mit druckbeaufschlagtem Gas den Luftdurchgang (34) zu sperren.

9. Verfahren nach Anspruch 8, **dadurch gekennzeichnet, dass** es einen Schritt eines Erfassens einer ungewollten Öffnung des Elektroventils (33) durch eine Geschwindigkeitsmessung ungleich null der pneumatischen Turbine (30) bei Nichtvorhandensein eines Befehls zur Öffnung des Elektroventils (33) und außerhalb einer Prozedur eines Schnellneustarts des Turbomotors umfasst.

10. Verfahren nach einem der Ansprüche 6 bis 9, **dadurch gekennzeichnet, dass** es einen Schritt eines Speicherns der Geschwindigkeitsmessungen der pneumatischen Turbine (30) umfasst, um eine Trendverfolgung des Zustands der pneumatischen Turbine (30) vorlegen zu können.

## Claims

1. Device for integrity testing a system for rapid reactivation of a turboshaft engine (5) of a helicopter, comprising a pneumatic turbine (30) that is mechanically connected to said turboshaft engine (5) and is supplied with pressurised gas, upon a command, by a pneumatic supply circuit (8) such that it is possible to rotate said turboshaft engine (5) and ensure that it is reactivated, said testing device being **characterised in that** it comprises:
- means (21, 22) for withdrawing pressurised air from the turboshaft engine (5),
- a duct (23) for conveying said withdrawn air to said pneumatic circuit (8) for supplying said pneumatic turbine (30),
- means for determining the rotational speed of said pneumatic turbine (30).

2. Device according to claim 1, **characterised in that** it comprises an electrovalve (33) arranged in the region of the joining point between the pneumatic circuit (8) and said air-conveying duct (23), said electrovalve (33) being configured to open an air passage (34) between said air-conveying duct (23) and said pneumatic circuit (8) upon a command from a control unit and in the absence of a pressurised gas supply from said pneumatic circuit (8), and to close said air passage (34) in the absence of a command or in the presence of a pressurised gas supply from said pneumatic circuit.

3. Device according to claim 2, **characterised in that** said electrovalve (33) comprises a preloaded spring (35) suitable for keeping the air passage (34) closed in the absence of a command or in the presence of a pressurised gas supply from said pneumatic circuit (8).

4. Testing device according to any of claims 1 to 3, **characterised in that** said means (21, 22) for withdrawing pressurised air from the turboshaft engine (5) are arranged in the region of a compressor (14) of said turboshaft engine.

5. Helicopter turboshaft engine provided with a rapid reactivation system, comprising a pneumatic turbine (30) that is mechanically connected to said turboshaft engine and is supplied with pressurised gas, upon a command, by a pneumatic supply circuit (8) such that it is possible to rotate said turboshaft engine and ensure that it is reactivated, **characterised in that** it comprises a device for integrity testing said rapid reactivation system according to any of claims 1 to 4.

6. Method for integrity testing a system for rapid reactivation of a turboshaft engine (5) of a helicopter, comprising a pneumatic turbine (30) that is mechanically connected to said turboshaft engine (5) and is supplied with pressurised gas, upon a command, by a pneumatic supply circuit (8) such that it is possible to rotate said turboshaft engine (5) and ensure that it is reactivated, **characterised in that** it comprises:
- a step of withdrawing pressurised air from the turboshaft engine (5),
- a step of conveying said air to said pneumatic turbine (30),
- a step of measuring the rotational speed of said pneumatic turbine (30).

7. Method according to claim 6, **characterised in that** it comprises a step of comparing the measured rotational speed of said pneumatic turbine (30) with a predetermined threshold speed.

8. Method according to claim 7, **characterised in that** said air-conveying step comprises a step of commanding the opening of an electrovalve (33) arranged in the region of the joining point between the pneumatic circuit (8) and said air-conveying duct (23), said electrovalve (33) being configured to open an air passage (34) between said air-conveying duct (23) and said pneumatic circuit (8) upon a command from a control unit and in the absence of a pressurised gas supply from said pneumatic circuit (8), and to close said air passage (34) in the absence of a command or in the presence of a pressurised gas supply from said pneumatic circuit (8).

9. Method according to claim 8, **characterised in that** it comprises a step of detecting if said electrovalve (33) is opened in an untimely manner by means of a non-zero speed measurement for said pneumatic turbine (30) in the absence of a command to open said electrovalve (33) and when the procedure for rapid reactivation of the turboshaft engine is not in operation.

10. Method according to any of claims 6 to 9, **characterised in that** it comprises a step of saving speed measurements for said pneumatic turbine (30) such that it is possible to monitor the trend for the state of the pneumatic turbine (30).
